# EUROPEAN PATENT APPLICATION

(11) **EP 2 306 370 A2**
(43) Date of publication of application: **06.04.2011**
(21) Application number: 10177829.8
(22) Date of filing: 21.09.2010
(51) Int. Cl.: G06K 19/073

(54) **Data input device**

(30) Priority: 02.10.2009 JP 2009230205
(71) Applicant: Ricoh Company, Ltd, Ohta-ku Tokyo 143 (JP)
(72) Inventor: Kawase, Tsutomu, Tokyo 143-8555 (JP)
(74) Representative: Schwabe - Sandmair - Marx

(57) **Abstract**

A data input device (SW1, SW2) is configured to include a first RFID tag (74, 75) containing identification data and being able to transmit the identification data to an RFID reader (4) upon receipt of a radio wave from the RFID reader (4), a conductive element (80) which allows the first RFID tag (74, 75) to be incommunicable with the RFID reader (4) when the conductive element (80) is close to the first RFID tag (74, 75), and an operative element (64) which is configured to support the conductive element (80) and bias the conductive element (80) to a position close to the first RFID tag (74, 75) so that the first RFID tag (74, 75) becomes incommunicable and to return the conductive element (80) against a bias force to a position away from the first RFID tag (74, 75) so that the first RFID tag (74, 75) becomes communicable.

## Description

### Background of the Invention

The present invention relates to a data input device which transmits/receives data by radio communication to/from an RFID (Radio Frequency Identification) tag in which identification data is contained as well as to a data processing system incorporating such a data input device.

In cell production system, a data processing system using an RFID tag has been introduced for the purpose of checking progress of a product during assembly, instructing parts to be assembled or the like. Using such a data processing system, an operator can detect a tag ID, input data such as work status together with the tag ID to the system, and transmit the data to a management section. Data input to the data processing system are event data such as troubles, failures, or shortage occurring in worksites, for example.

Conventionally, a personal computer or the like is installed as a data input device in a worksite to input event data with a keyboard or a touch panel, and transmit the input data to a host system.

However, there is a problem with use of the personal computer as a data input device that installation of the personal computer with a keyboard or a touch panel occupies a space in the work area of an operator and reduces the work space for the operator. Further, it needs electric cables or wires for connection among the host system, the personal computer and the data input device, increasing manufacture costs. Also, cables may be tangled or jumbled, disorganizing the work area.

In view of solving the above problems, there is a data input device to communicate with an RFID tag for data inputs using a radio wave field. Japanese Laid-open Patent Application Publication No. 2004-21734 (Reference 1) and No. 2009-123162 (Reference 2) disclose such a data input device, for example.

Reference 1 discloses a key pad system using an RFID tag operating in accordance with data inputs with keys, aiming to reduce the number of wiring harnesses with a key pad, secure power supply for wireless connection, and reduce the load on a keyboard power switch due to turning-on and off. However, it has drawbacks that it requires a large number of RFID tags in a complicated structure and it is difficult to relate key inputs to the RFID tag operation.

Reference 2 discloses an RFID tag device which includes a new interface which can switch signal outputs according to a postural change thereof relative to an RFID reader in addition to moving closer to or away from the reader. However, the device therein requires a space containing the RFID tag movable with gravity and a controller controlling the communication of the RFID tag according to the movement of the RFID tag, making the system configuration complicated. Moreover, to surely input data, the RFID tag has to be changed in direction or placed on somewhere. In a long communication distance, in particular, a change in intensity of electro-magnetic waves increases, making it difficult to distinguish signals when no change occurs in status of the RFID tag from signals when data is inputted. This elongates time for determining the status of signals, deteriorating the responsiveness of the RFID tag. Further, in this system, data input operation for switching signal outputs consists of four stages of (1) holding up the device, (2) determining a proper direction, (3) setting the device to the direction, and (4) putting the device down, requiring a certain operation time.

### Summary of the Invention

The present invention aims to provide a data input device compact in size and with low manufacture cost which can determine the status of signals and allow data input operation in a short time, and does not need wire connection via cables, as well as to provide a data process system including such a data input device.

According to one aspect of the present invention, a data input device comprises a first RFID tag containing identification data and being able to transmit the identification data to an RFID reader upon receipt of a radio wave from the RFID reader, a conductive element which allows the first RFID tag to be incommunicable with the RFID reader while the conductive element is close to the first RFID tag, and an operative element which is configured to support the conductive element and bias the conductive element to a position close to the first RFID tag so that the first RFID tag becomes incommunicable and to return the conductive element against a bias force to a position away from the first RFID tag so that the first RFID tag becomes communicable.

Preferably, the data input device further comprises a second RFID tag which is configured to be constantly communicable with the RFID reader via the radio wave irrespective of a position of the conductive element.

Preferably, the data input device further comprises a device body which is formed to be non-conductive, supports the first RFID tag and the conductive element and integrally comprises an operative member functioning as the operative element and a stopper, the operative member configured to be elastically deformable and change a position relative to a base portion of the device body, the stopper provided on the base portion of the device body and configured to engage with the operative member while the operative member is in the middle of retuning from its elastic deformation, wherein the first RFID tag is disposed in the stopper in such a position as to contact with the operative member; and the conductive element is disposed in the operative member in such a position as to be able to contact with or get close to the first RFID tag so as to allow the first RFID tag to be incommunicable.

Preferably, the data input device further comprises a protective element which is configured to prevent the first RFID tag from directly contacting with the operative element.

According to another aspect of the present invention, a data processing system comprises an RFID reader which is placed to emit a radio wave to a work object having an RFID tag product in a work station in which the work object is processed, and to receive identification data from the RFID tag product, the above data input device being placed in a radio wave field of the RFID reader, and a data processor which processes identification data of the RFID tag product and identification data of the first RFID tag read by the RFID reader.

### Brief Description of the Drawings

Features, embodiments, and advantages of the present invention will become apparent from the following detailed description with reference to the accompanying drawings:
FIG. 1 is a side view of a first switch SW1 as a data input device in a data processing system A according to the first embodiment;
FIG. 2 is a perspective view of a work station S to which the data processing system according to the first embodiment is applied;
FIG. 3 shows the total data processing system A;
FIG. 4 shows a total communication system to which the data processing system according to the first embodiment is applied;
FIG. 5 is a perspective view of a status indicator 5 of the data processing system A according to the first embodiment;
FIG. 6 is a perspective view of the first switch SW1;
FIG. 7 is an exploded perspective view of an essential part of the first switch SW1, seen from a stopper 63;
FIG. 8 is another exploded perspective view of an essential part of the first switch SW1, seen from the stopper 63;
FIG. 9 shows a press-down RFID tag 74 of the first switch SW1;
FIG. 10 is a cross sectional view of the essential part of the first switch SW1 when the operative member 64 is away from the stopper 63;
FIG. 11 shows an action of the first switch SW1 when the conductive film 80 contacts with the press-down RFID tag 74;
FIG. 12 shows an action of the first switch SW1 when the conductive film 80 is away from the press-down RFID tag 74;
FIG. 13 is a flowchart for processing of the data processing system A according to the first embodiment;
FIG. 14 shows an operation to the first switch SW1;
FIG. 15 is a side view of another switch as a data input device according to a second embodiment;
FIG. 16 is a perspective view of a work station S2 in which a data processing system according to a third embodiment is installed;
FIG. 17 is a plan view of an example of how the switches SW1, SW2 are worn; and
FIG. 18 is a cross sectional view of another example of a data input device.

### Detailed Description of the Preferred Embodiments

Hereinafter, embodiments of the present invention will be described in detail with reference to the accompanying drawings.

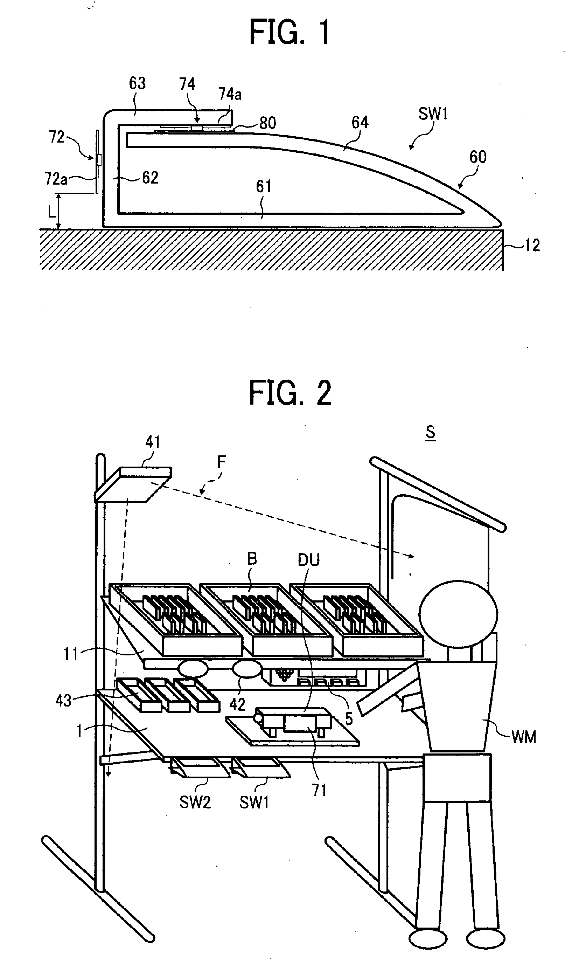

In FIG. 1 a data input device according to one embodiment of the present invention comprises a first RFID tag 74 containing identification data and being able to transmit the identification data to an RFID reader 4 upon receipt of a radio wave from the RFID reader 4, a conductive element 80 which allows the first RFID tag 74 to be incommunicable with the RFID reader 4 while the conductive element 80 is close to the first RFID tag 74, and an operative member 64 which is configured to support the conductive element 80 and bias the conductive element 80 to a position close to the first RFID tag 74 so that the first RFID tag becomes incommunicable and to return the conductive element 80 against a bias force to a position away from the first RFID tag 74 so that the first RFID tag becomes communicable.

### First Embodiment

A data processing system including a data input device according to a first embodiment will be described with reference to FIGs. 1 to 14.

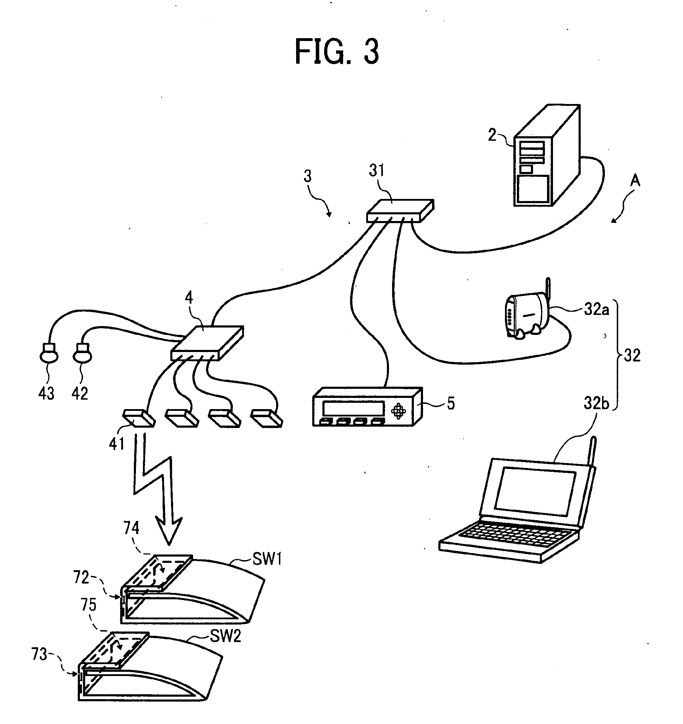

FIG. 2 shows an example of a work station S to which a data processing system A (FIG. 3) is applied for cell production system. The work station S includes a workbench 1, in which assembly work of a develop unit DU of an imaging device such as a copier, a printer, or a facsimile machine is done.

Receiving the develop unit DU from a preceding process, an operator WM places it on the workbench 1, fetches a component B from a shelf 11 for assembling it into the develop unit DU and inspects the develop unit DU visually or with a jig. The operator WM determines whether or not the assembly work and inspection are normally done, and input the resultant as event data with a first switch SW1 and a second switch SW2 which are a data processor of the work station S.

An RFID tag product 71 containing identification data is pre-set in the develop unit DU and the event data can be written to the RFID tag product 71 when necessary.

The data processing system A according to the first embodiment is configured to read/write identification data from/to the RFID tag product 71 and perform preset processing based on the identification data. The data process system A is described in detail in the following.

In FIG. 3 the data processing system A comprises a system controller (data processor) 2, a network 3, a reader writer (RFID reader) 4, a status indicator 5, a first switch (data input device) SW1, and a second switch (data input device) SW2.

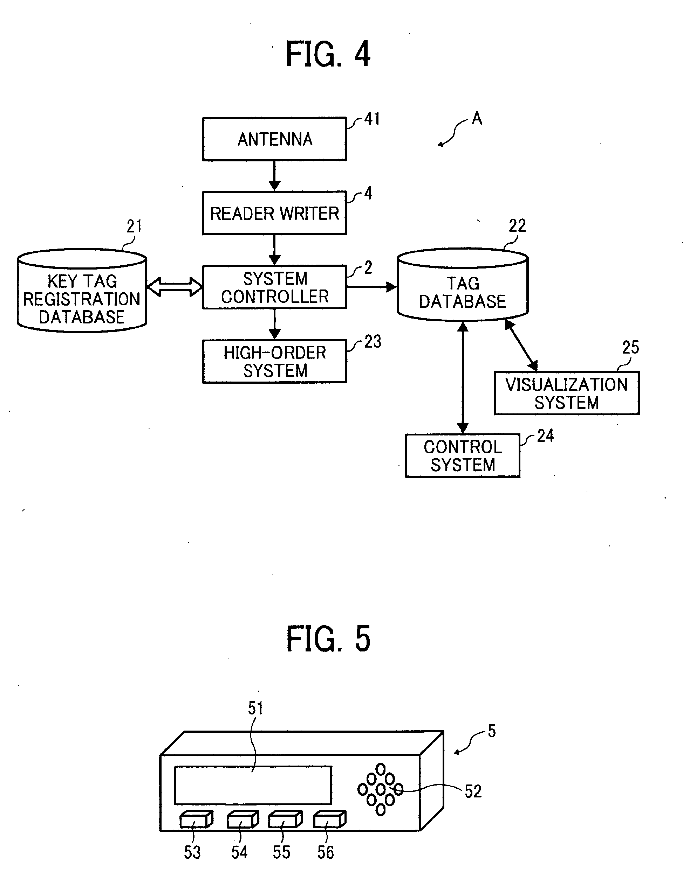

The system controller 2 is a data processor such as a personal computer or a server and receives identification data from the RFID tag product 71 and later-described RFID tags 72 to 75 and executes processing based on a pre-installed program. As shown in FIG. 4, the system controller 2 is connected with a key tag registration database 21 and a tag database 22 as well as with a high-order system 23 which places an order for parts and components and controls a production schedule. The tag database 22, though a detailed description is omitted, is connected with a control system 24 and a visualization system 25 to control the total system and transmit visualized data.

Referring back to FIG. 3, the reader writer 4 is connected with a plurality of RFID antennas 41, a first lamp 42, and a second lamp 43, and configured to allow the RFID antennas 41 to emit electromagnetic waves to scan the RFID tags 71 to 75 and read identification data stored in the RFID tags 71 to 75. It also allows the RFID antennas 41 to output electromagnetic waves for data write to the RFID tag product 71 when necessary.

As shown in FIG. 2, the RFID antennas 41 are mounted on the top of a frame of the workbench 1 to include the workbench 1 in a radio wave field F of the RFID antennas 41.

The first lamp 42 is disposed immediately above the first switch SW1 and turns on to indicate that the first switch SW1 is pressed down. Similarly, the second lamp 43 is disposed immediately above the second switch SW2 and turns on to indicate that the second switch SW2 is pressed down.

In FIG. 3 the reader writer 4 is connected with the system controller 2 via the network 3 and transmits the identification data read from the RFID tags 71 to 75 to the system controller 2. The network 3 comprises a hub 31 and a wireless LAN 32 including an input unit 32a and an output unit (personal computer, for example) 32b.

The status indicator 5 is provided on the back side of the shelf 11 so that the operator WM can visually check it as in FIG. 2. It comprises a display 51, a speaker 52, and first to fourth indicators 53 to 56 as shown in FIG. 5.

The display 51 is a liquid crystal display to display the number of units on which the work has been completed, for example.

The indicators 53 to 56 each include a light source such as an LED to turn on. The first indicator 53 turns on to indicate detection of a fixed RFID tag 72 (second RFID tag) of the first switch SW1, the second indicator 54 turns on to indicate a fixed RFID tag (second RFID tag) 73 of the second switch SW2, the third indicator 55 turns on to indicate detection of a press-down RFID tag (first RFID tag) 74 of the first switch SW1, and the fourth indicator 56 turns on to indicate detection of a press-down RFID tag (first RFID tag) 75 of the second switch SW2.

The first switch SW1 and second switch SW2 are provided together on a support portion 12 (FIG. 1) on the left side of the workbench 1. Both of the switches SW1, SW2 are structured the same, therefore, only the first switch SW1 is described in detail in the following.

In FIG. 1 the first switch SW1 comprises a body 60, the fixed RFID tag 72 and the press-down RFID tag 74.

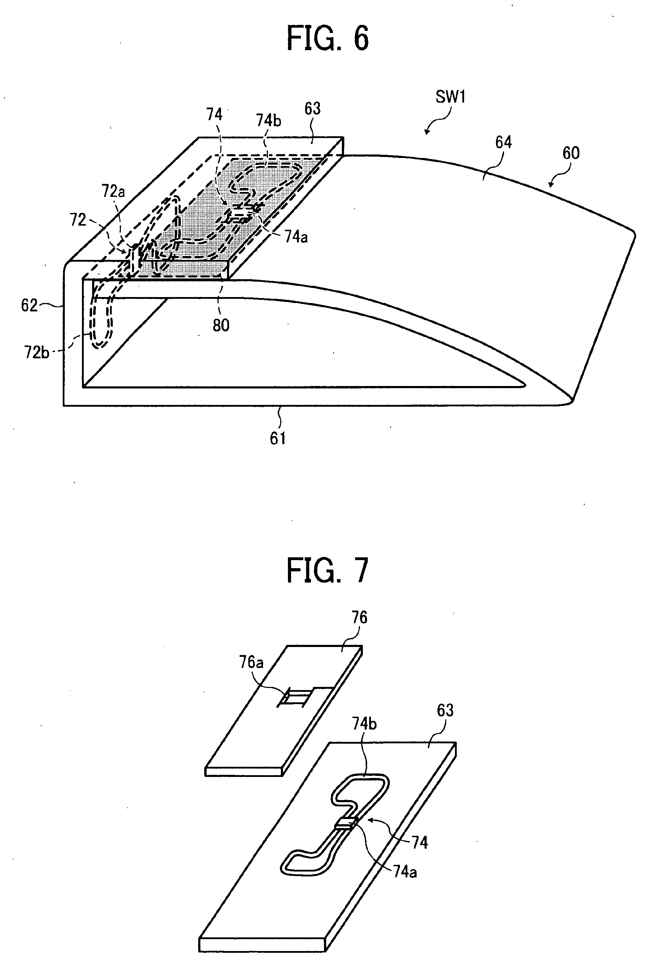

The body 60 in FIG. 6 is made of an elastic, insulative plate (for example, resin such as flexible PVC) and comprises a substantially rectangular base 61 (base portion), a wall 62 (base portion) standing substantially vertically on one side of the base 61, a stopper 63 extending from the top end of the wall 62 to face the base 61, an operative member 64 obliquely standing from the other side of the base 61 and gradually curved to contact with the bottom face of the stopper 63.

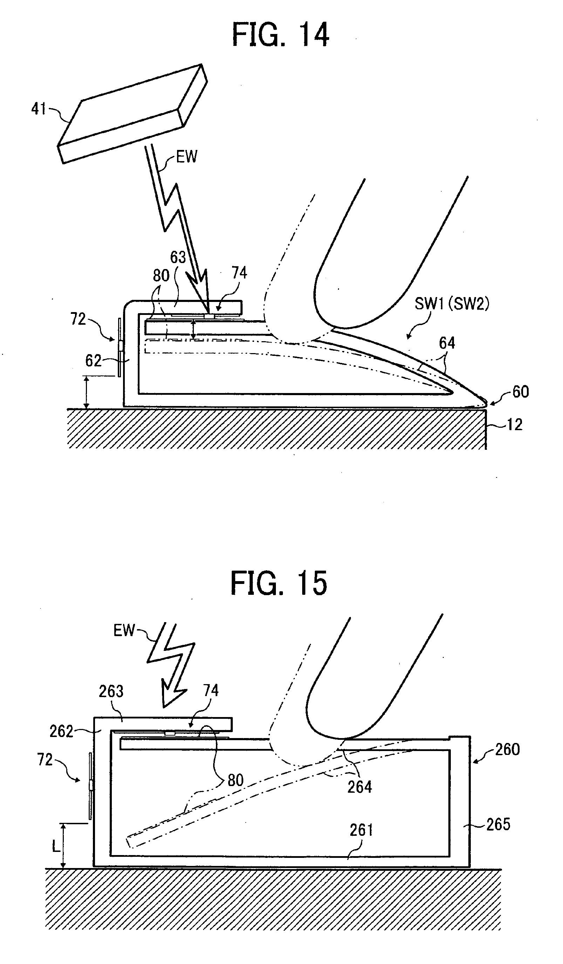

The operative member 64 naturally reaches an upper position than that in the drawing, and is configured to be elastically deformable downwards and pressed down to contact with the bottom face of the stopper 63 while it is being returned from its elastic deformation. In FIG. 6 the operative member is close to the RFID tag while in FIG. 14 that indicated by the dashed-double dotted line is away therefrom.

The fixed RFID tag 72 shown in FIGs.1, 6 is provided on the outer side of the wall 62 and comprises a chip 72a and an antenna element 72b wired on the outer side. The antenna element 72b is provided with an interval L from the support portion 12 to be constantly communicable in the radio wave field F. The interval L is arbitrarily decided as long as the antenna element 72b is unsusceptible to attenuation of radio waves and electric power irrespective of property of the support portion 12 as conductive, insulative, or dielectric. It can be 5mm or more in UHF bandwidth (950MHz).

The press-down RFID tag 74 is mounted on the bottom face of the stopper 63 and comprises the chip 74a and the antenna element 74b wired thereon in FIGs. 6, 7.

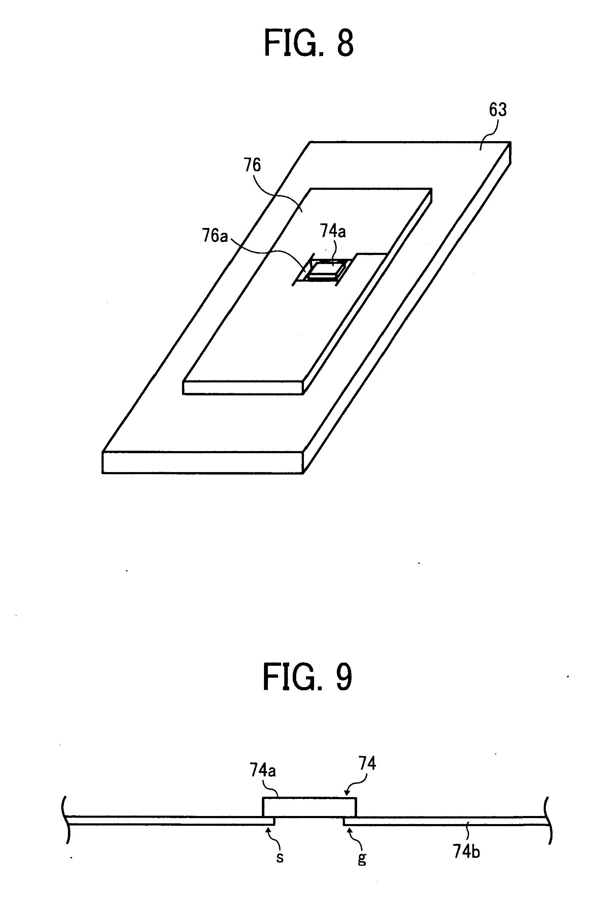

The ends of the antenna element 74b are attached to the chip 74a by blazing via joint portions sg in FIG. 9. There is a possibility that the joint portions sg are damaged due to pressure from the operative member 64 and later-described repetitive contacts with the chip 74a.

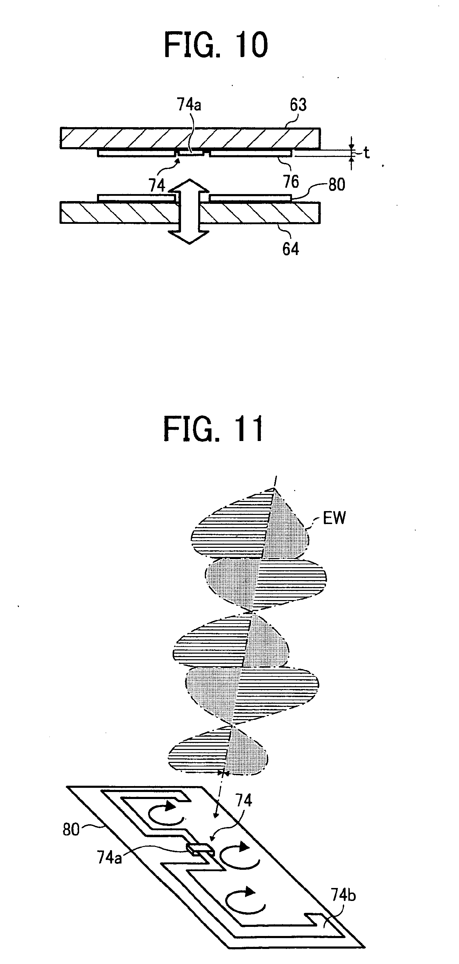

In order to prevent this from occurring, a protective sheet 76 (protective element) is provided as shown in FIG. 7. The protective sheet 76 is configured to cover the press-down RFID tag 74 and is an insulative, elastic, rectangular sheet with an opening 76a. In FIG. 8 the protective sheet covers the antenna element 74b entirely with the chip 74a of the press-down RFID tag 74 seen through the opening 76a. The thickness t (FIG. 10) of the protective sheet 76 is set to be slightly larger than the thickness of the chip 74a of the press-down RFID tag 74. Also, the thickness t is set to such a value as to prevent generation of electric power in the press-down RFID tag 74 while the operative member 64 contacts with the stopper 63 by pressure, for example, 1.5mm or less in the UHF bandwidth (950MHz).

Moreover, a conductive film (conductive element) 80 is provided on a portion of the operative member 64 facing the protective sheet 76 and the bottom face of the stopper 63. The conductive film 80 is a rectangular sheet made of conductive materials such as aluminum foil or a metal plate and larger in size than the protective sheet 76 to entirely cover the antenna element 74b.

The conductive film 80 is configured to interrupt the communication of the press-down RFID tag 74 when the operative member 64 contacts with the stopper 63 and to permit it when the operative member 64 is away from the stopper 63.

That is, as shown in FIG. 11, while the conductive film 80 and the press-down RFID tag 74 contact with or get close to each other, an electromagnetic wave EW from the RFID antennas 41 generates an eddy current on the surface of the conductive film 80. But, the eddy current cannot flow to anywhere so that it is just consumed thereon. Therefore, the chip 74a cannot receive a current so that the press-down RFID tag 74 becomes inoperable and incommunicable.

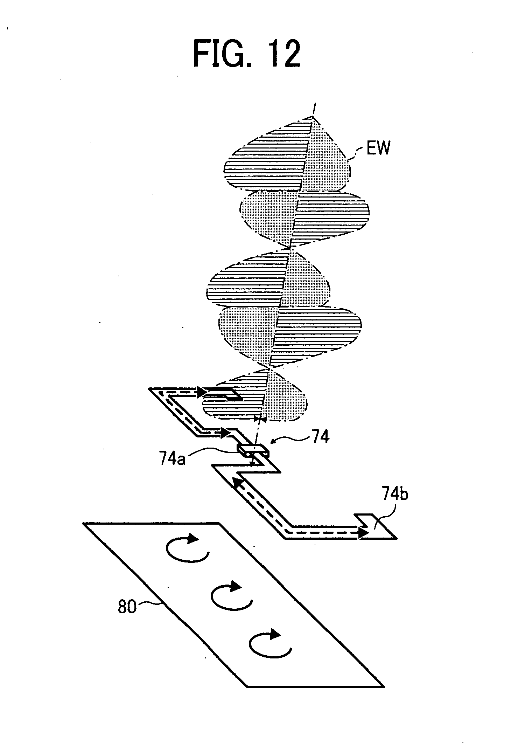

Meanwhile, as shown in FIG. 12, while the conductive film 80 is away from the press-down RFID tag 74, the electromagnetic wave EW from the RFID antennas 41 causes a current on the antenna element 74b to be supplied to the chip 74a. Thereby, the press-down RFID tag 74 becomes operable and communicable.

Accordingly, the conductive film 80 interrupts the communication of the press-down RFID tag 74 while the operative member 64 is pressed by the stopper 63 to get close to the RFID tag 74 as indicated by the solid line in FIG. 14. Meanwhile, the conductive film 80 is away from the press-down RFID tag 74 when the operative member 64 is away downwards from the stopper 63 as indicated by the dashed double-dotted line in the drawing. The operative member 64 needs to be elastically deformed downwards by 10mm or more, for example, in order to allow the press-down RFID tag 74 to be communicable.

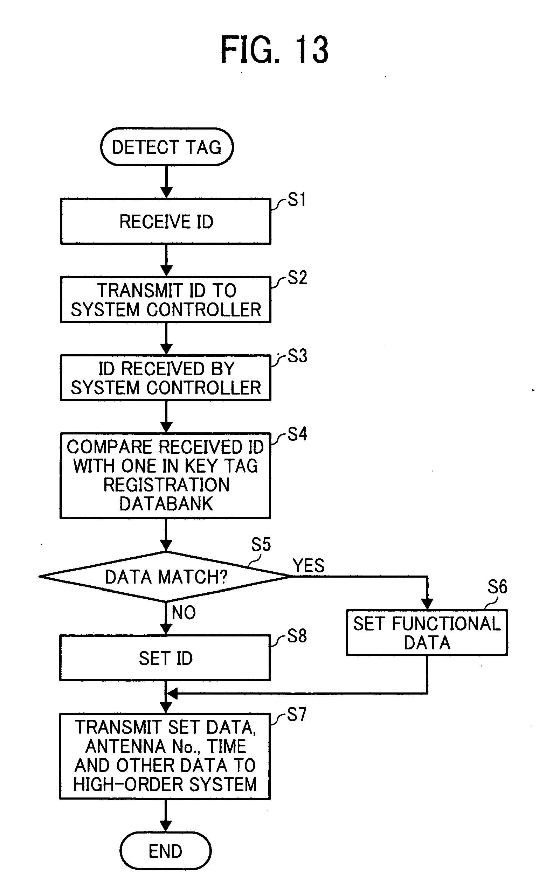

The workflow carried out in the work station S of FIG. 2 will be described with reference to a flowchart in FIG. 13 which shows the operation of the data processing system A and the processing of the system controller 2 according to the present embodiment.

In the work station S the operator WM places a develop unit DU on the workbench 1, upon receipt of it from the preceding process. The workbench 1 is disposed in the radio wave field F of the RFID antennas 41 so that identification data stored in the RFID tag product 71 of the develop unit DU is readable.

The first switch SW1 and second switch SW2 are also disposed in the radio wave field F so that identification data of the fixed RFID tags 72, 73 constantly operable is readable. However, the press-down RFID tags 74, 75 of the switches SW1, SW2 are incommunicable. In a normal state the operative member 64 of the switch SW1 (SW2) is not pressed down so that the conductive film 80 is close to the antenna element 74b of the press-down RFID tag 74 (75). Accordingly, without occurrence of an electromotive force, the press-down RFID tag 74 is made incommunicable even in the radio wave field F.

In this state, the reader writer 4 receives identification data of the RFID tag product 71 and the fixed RFID tags 72, 73 in step S1, and transmits the identification data to the system controller 2 via the network 3 in step S2. Receiving the identification data in step S3, the system controller 2 compares it with data registered in the key tag registration database 21 in step S4 and determines whether or not the identification data coincides with the registered data in step S5.

When the identification data coincides with the registered data, functional data in association with the identification data is set in step S6. Generally, obtained identification data matches with the registered data of the RFID tag product 71 and fixed RFID tags 72, 73 at a time when the develop unit DU is placed on the workbench 1. The set functional data, an antenna No., time, and other data are transmitted to the high-order system 23 in step S7. Meanwhile, when the identification data does not match with the registered data in step S5, the identification data is set in step S8 and the set identification data together with an antenna No., time, and other data are transmitted to the high-order system 23 in step S7.

Further, with the functional data set in step S6, the first and second indicators of the status indicator 5 turn on. This allows the operator WM to know that the first and second switches SW1, SW2 are ready to operate. Meanwhile, with the identification data set in step S8, the display 51 displays that the identification data is set.

Then, the operator WM does a predetermined work such as attachment of parts or inspection of the develop unit DU. Upon finishing the predetermined work normally, the operator WM presses down the operative member 64 of the first switch SW1 to input "normal completion of work in the work station S" thereto as event data. With an occurrence of anomaly in the work or the develop unit DU, the operator WM presses down the operative member 64 of the second switch SW2 to input "non-normal completion of work in the work station S" thereto as event data.

Upon pressing down the operative member 64 of each of the first and second switches SW1, SW2, the conductive film 80 moves away from the press-down RFID tag 74 (indicated by dashed double-dotted line in FIG. 14) and the antenna element 74b receives the electromagnetic wave EW from the RFID antennas 41 to generate electric current. Thereby, the press-down RFID tag 74 is operated to transmit identification data.

When the RFID antennas 41 receives identification data from either of the press-down RFID tags 74, 75 of the switches SW1, SW2 in step S1, the system controller 2 compares the data with identification data registered in the key tag registration database 21 in steps S2 to S5. When both items of the identification data match with each other, functional data in association with the press-down RFID tags 74, 75 are set in step S6 while when both items of the identification data do not match, the obtained identification data is set in step S8.

Thus, with the matching of the identification data, data on normalcy or non-normalcy corresponding to the press-down of either of the switches SW1, SW2 is transmitted to the high-order system 23 and written to the RFID tag product 71 when necessary.

Here, with the first switch SW1 pressed down, the third indicator 55 of the status indicator 5 and the first lamp 42 are turned on to notify the operator WM that the data input with the first switch SW1 is normally completed. Meanwhile, with the second switch SW2 pressed down, the fourth indicator 56 of the status indicator 5 and the second lamp 43 are turned on to notify the operator WM that the data input with the second switch SW2 is normally completed.

The effects of the data processing system A according to the first embodiment are described in the following.
The data processing system A is configured that while the first switch SW1 and the second switch SW2 are in a non-pressed state, data are outputted only from the fixed RFID tags 72, 73 and while they are in a pressed state, data are outputted from both the fixed RFID tags 72, 73 and the press-down RFID tags 74, 75. Thus, the system A uses the respective RFID tags 72 to 75 to output data in the radio wave field F, which can reduce the amount of a space for data input devices in the worksite, compared with using a personal computer and a keyboard for data inputs. Moreover, the first and second switches SW1, SW2 do not need cables for connection with the system controller 2 and the power supply, which can further contribute to simplifying the work station and reducing manufacture costs.

In comparison with a prior art system using a large number of RFID tags or changing the posture of the RFID tag, each of the first and second switches SW1, SW2 can have a simple structure of the two RFID tags, fixed RFID tags 72, 73 and press-down RFID tags 74, 75, respectively; therefore, they are more cost-effective. It is also possible to reduce the amount of a space in the work station S for the data input device (first and second switches SW1, SW2). The RFID tags of the switches SW1, SW2 are placed in the radio wave field F of the reader writer 4 so that they can be activated without fail.

The data processing system A uses, for the radio wave field F, an existing radio wave field for reading data from the RFID tag product 71 of the develop unit DU as a work object. Accordingly, it is cost-effective.

The RFID tags 72 to 75 of the first and second switches SW1, SW2 are fixed to the wall 62 and the stopper 63 and the outputs of the press-down RFID tags 74, 75 change by the elastic deformation of the operative member 64 including the conductive film 80. Because of this, the data input device according to the present embodiment can be of a simple structure and is easy to operate, in comparing the device disclosed in Reference 2 which is configured to movably contain an element having the RFID tag. Moreover, since it is not necessary to move the RFID tags, the intensity of the electromagnetic wave can be less changed, achieving stable read accuracy of the identification data and excellent responsiveness.

With provision of the protective sheet 76 to cover the stopper 63, it is made possible to relieve an impact on the press-down RFID tags 74, 75 due to the direct contact with the operative member 64 as well as to prevent a continuous load on the press-down RFID tags by the elastic force of the operative member 64. Accordingly, it is possible to protect the press-down RFID tags 74, 75 and prevent damage on the joint portions sg of the antenna element 74b.

The protective sheet 76 is provided with the opening 76a not to cover the chip 74a of the press-down RFID tag 74 (75) so that the pressure from the operative member 64 is unlikely to affect the chip 74a via the protective sheet 76. Thus, the chip 74a can be better protected than one covered with the protective sheet.

Hereinafter, second to fourth embodiments of the present invention will be described. Note that in the above embodiments the same components are given the same numeric codes and only a difference from the first embodiment will be described.

### Second Embodiment

The second embodiment of the present invention is described with reference to FIG. 15. A difference between the first and second embodiments is in that a body 260 of the switch SW1 (SW2) is differently shaped in a box shape whose cross section is a quadrangle as in the drawing. The body 260 is made of an insulative resin as the one in the first embodiment and comprises a base 261, a pair of a first wall 262 and a second wall (base portion) 265 standing on both side of the base 261, respectively, a stopper 263 extending from the top end of the first wall 262 to the second wall 265, and an operative member 264 extending from the top end of the second wall 265 to the first wall 262.

As in the first embodiment, the RFID tags 72, 74 are provided on the first wall 262 and the bottom face of the stopper 263, respectively. The operative member 264 is brought into contact with the bottom face of the stopper 263 by pressure, and configured to be elastically deformable as indicated by the dashed double-dot line. The amount of elastic deformation thereof is set so as to move away the conductive film 80 enough to make the press-down RFID tag 74 communicable.

The data input device according to the second embodiment is configured to exclude the protective sheet 76. The protective sheet 76 is omissible as long as the durability of the chip 74a and the joint portions sg is sufficiently high. Alternatively, it can be configured to accommodate the chip 74a of the press-down RFID tag 74 in a concave provided in the bottom face of the stopper 263, so as to prevent the chip 74a and the joint portions sg from contacting with the operative member 264 and the conductive film 80.

The second embodiment can attain the same effects as those of the first embodiment. Further, without the protective sheet 76, the structure of the data input device can be more simplified.

### Third Embodiment

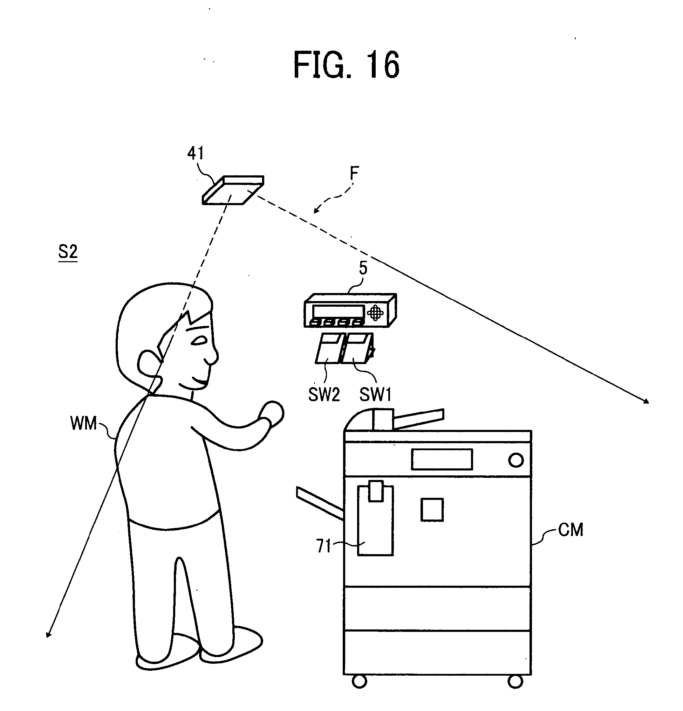

A data input device according to the third embodiment is described.
The third embodiment concerns an example in which the data input device is installed in a work station S2 in FIG. 16. In the work station S2, a copier CM is placed in the radio wave field F of the RFID antennas 41 and subjected to a predetermined work such as adjustment, inspection, or setting. The status indicator 5, first switch SW1, and second switch SW2 are also disposed in the radio wave field F of the work station S2.

A workflow is as follows.
First, the operator WM brings a copier CM in the work station S2. At this point the first and second indicators 53, 54 of the status indicator 5 are turned on as in the first embodiment.

Next, the operator WM does the predetermined work on the copier CM and presses down the first switch SW1 when the work is normally completed or the second switch SW2 when the work is not normally completed.

In accordance with the operator's manipulation to either of the first and second switches SW1, SW2, the system controller 2 turns on either the third or fourth indicator 55, 56 to notify the operator WM that his/her switch operation has been received, and stores data in association with the switch operation together with time.

The third embodiment can also attain the same effects as those of the first embodiment.

### Fourth Embodiment

The fourth embodiment concerns an example in which the first and second switches SW1, SW2 as the data input device are configured to be wearable on the arm of the operator WM using a length adjustable belt, for example.

In the present embodiment the operator WM moves around the copier CM as a work object, for example unlike in the first embodiment that he/she is in a fixed position at the workbench 1 of the work station S2. It can be troublesome for the operator WM to move to input a work result to the first and second switches SW1, SW2.

In order to avoid such a trouble, the present embodiment is configured to eliminate the necessity for the operator WM to move to input data to the fixed first and second switches SW1, SW2 after completion of work as in the third embodiment by operating the wearable first and second switches SW1, SW2 in the radio wave field F in the work station S2.

The first to fourth embodiments have described the examples in which the data input device is used in a worksite in the cell production system. However, the present invention is not limited to such examples. It can be applicable in any place where digital signal inputs are needed.

Further, the first to fourth embodiments have described the examples of the data input device in which the operative member and the stopper are integrated with the device body. However, the present invention is not limited to such examples. The operative member and the stopper can be separately formed.

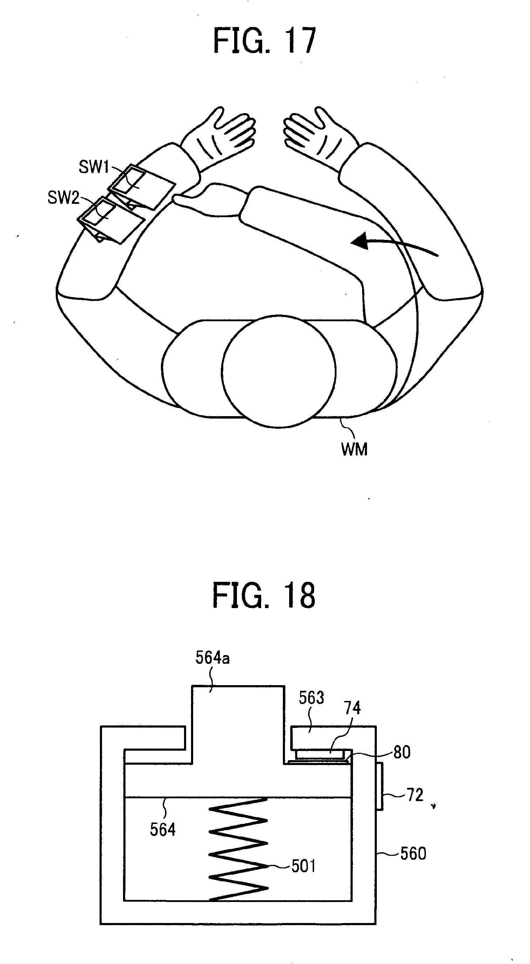

FIG. 18 shows an example of such a data input device. An operative member 564 is slidably contained in a box-like device body 560. The operative member 564 is biased upwards by a bias member 501 such as a spring. The device body 560 includes a stopper 563 which restricts the slide-up of the operative member 564. The press-down RFID tag 74 is mounted on the bottom face of the stopper 563 and the operative element 564 includes the conductive film 80 in a position opposite to the press-down RFID tag 74 and is integrated with a press button 564a.

In FIG. 18, normally, the conductive film 80 of the operative member 564 biased by the bias element 501 is close to or contacts with the press-down RFID tag 74 so that the press-down RFID tag 74 is incommunicable. Upon the press button 564a being pressed, the operative member 564 is pressed down to move the conductive film 80 away from the press-down RFID tag 74, making the press-down RFID tag 74 communicable.

Furthermore, the protective sheet 76 is provided on the stopper 63 in the first embodiment, however, it can be provided on the operative member 64.

Further, the first to fourth embodiments have described the examples in which the fixed RFID tags 72, 73 are provided as second RFID tags. However, the present invention is not limited to such examples. The fixed RFID tags 72, 73 are omissible from the data input device especially when fixed in the radio wave field F. The RFID tags can be the press-down RFID tags 74, 75 only. In this case, data inputs to the high-order system are done according to presence/absence of identification data from the press-down RFID tag 74.

Further, in the above embodiments, the protective sheet 76 is used for the protective element. However, it is not limited to a sheet-like element. It can be arbitrarily formed as long as it can prevent the operative member from contacting with the RFID tag. In the first embodiment, for example, a plurality of dot-like elastic elements can be attached to the operative member 64 or the stopper 63. Alternatively, a columnar or dot-like element can be integrated with the operative member 64 or the stopper 63 to extend to the stopper 63 or the operative member 64, respectively.

Further, in the above embodiments the conductive film 80 is used for the conductive element. However, it is not limited to a film-like element. It can be formed arbitrarily as long as it can get close to or contact with the RFID tag to make the RFID tag incommunicable.

According to any one of the above embodiments, the operative element is normally placed in a close position to the first RFID tag by a bias force so that the conductive element makes the first RFID tag incommunicable. Therefore, the identification data of the first RFID tag cannot be read by the RFID reader placed in the radio wave field. Meanwhile, when the operative element and the conductive element are moved away from the first RFID tag against the bias force, the first RFID tag becomes communicable so that receiving a radio wave from the RFID reader, the first RFID tag can transmit the identification data to the RFID reader.

Thus, the data input device can distinguish non-operation status and operation status of the first RFID tag according to presence or absence of wireless communication between the RFID) reader and the first RFID tag.

Further, data inputs can be done with the first RFID tag, the conductive element making the RFID tag communicable or incommunicable, and the operative element supporting the conductive element. Thus, compared with a system using a personal computer and a keyboard for data inputs, a large number of RFID tags or changing the posture of the RFID tag, the data processing system according to the present invention can be simplified in structure and occupies a smaller space in the worksite. Moreover, it does not need connecting cables, which can further contribute to organizing the worksite and reducing manufacture costs.

Moreover, signal inputs can be done by a single operation to the operative element to move against a bias force from close to far relative to the first RFID tag, which can shorten data input time.

Merely being placed in the radio wave field of the RFID reader, the first RFID tag can be activated without fail. Besides, the conductive element is moved but the first RFID tag is fixed in the device. Therefore, the intensity of the electromagnetic wave can be less changed in comparison with moving the RFID tag, achieving stable read accuracy of the identification data and excellent responsiveness.

Meanwhile, during non-operation of the operative element, the RFID reader can read identification data from the second RFID tag in communication with the second RFID tag. During operation of the operative element, the first RFID tag becomes communicable and the RFID reader can read identification data from both of the first and second RFID tags. Thus, it is made possible to prevent occurrence of failures in reading the first RFID tag when it is incommunicable during operation of the operative element, by determining whether or not the data input device is in a position data readable by the RFID reader based on presence/absence of identification data from the second RFID tag.

During non-operation, the operative member contacts with the stopper by its own elastic force as a bias force and the conductive element is close to the first RFID tag, which makes the first RFID tag incommunicable. Meanwhile, during operation, the operating member is moved away from the stopper against its own elastic force and the conductive element is away from the first RFID tag, which makes the first RFID tag communicable and transmissible of identification data. Thus, according to the present invention, the operative member integrated with the base portion of the device body can change a position by its own elastic and restoring force. The operative member can be simpler in structure than the one separate from the device body.

Furthermore, with provision of the protective element to prevent the operative member from directly contacting with the first RFID tag, it is made possible to relieve an impact on the first RFID tag as well as to prevent a pressure thereto due to the bias force of the operative member. This accordingly can improve durability of the first RFID tag.

The data processing system according to any of the above embodiments is configured that an existing RFID reader can be used for reading both of identification data of the RFID tag product attached to the work object and identification data of the first and second RFID tags by placing the data input device in the radio wave field of the RFID reader. This eliminates the necessity for a dedicated RFID reader for identification data of the first and second RFID tags, and reduces the size of the entire system.

Although the present invention has been described in terms of exemplary embodiments, it is not limited thereto. It should be appreciated that fluctuations may be made in the embodiments described by persons skilled in the art without departing from the scope of the present invention as defined by the following claims.

## Claims

1. A data input device (SW1, SW2) comprising:
a first RFID tag (74, 75) containing identification data and being able to transmit the identification data to an RFID reader (4) upon receipt of a radio wave from the RFID reader (4);
a conductive element (80) which allows the first RFID tag (74, 75) to be incommunicable with the RFID reader (4) while the conductive element (80) is close to the first RFID tag (74, 75); and
an operative element (64) configured to support the conductive element (80) and bias the conductive element (80) to a position close to the first RFID tag (74, 75) so that the first RFID tag (74, 75) becomes incommunicable and to return the conductive element (80) against a bias force to a position away from the first RFID tag (74, 75) so that the first RFID tag (74, 75) becomes communicable.

2. A data input device (SW1, SW2) according to claim 1, further comprising
a second RFID tag (72, 73) which is configured to be constantly communicable with the RFID reader (4) via the radio wave irrespective of a position of the conductive element (80).

3. A data input device (SW1, SW2) according to claim 1 or 2, further comprising
a device body (60, 260) which is formed to be non-conductive, supports the first RFID tag (74, 75) and the conductive element (80) and integrally comprises an operative member (64, 264) functioning as the operative element (64) and a stopper, the operative member (64, 264) configured to be elastically deformable and change a position relative to a base portion (61, 62) of the device body (60, 260), the stopper (63, 263, 563) provided on the base portion (61, 62) of the device body (60, 260) and configured to engage with the operative member (64, 264) while the operative member (64, 264) is in the middle of retuning from its elastic deformation, wherein:
the first RFID tag (74, 75) is disposed in the stopper (63, 263, 563) in such a position as to contact with the operative member (64, 264); and
the conductive element (80) is disposed in the operative member (64, 264) in such a position as to be able to contact with or get close to the first RFID tag (74, 75) so as to allow the first RFID tag (74, 75) to be incommunicable.

4. A data input device (SW1, SW2) according to any one of claims 1 to 3, further comprising
a protective element (76) which is configured to prevent the first RFID tag (74, 75) from directly contacting with the operative element (64).

5. A data processing system (A) comprising:
an RFID reader (4) which is placed to emit a radio wave to a work object having an RFID tag product (71) in a work station (S) in which the work object is processed, and to receive identification data from the RFID tag product (71);
the data input device (SW1, SW2) according to any one of claims 1 to 4 being placed in a radio wave field (F) of the RFID reader (4); and
a data processor (2) which processes identification data of the RFID tag product (71) and identification data of the first RFID tag (74, 75) read by the RFID reader (4).
